# EUROPEAN PATENT APPLICATION

(11) **EP 1 634 910 A1**
(43) Date of publication of application: **15.03.2006**
(21) Application number: 04745821.1
(22) Date of filing: 11.06.2004
(51) Int. Cl.: C08J 5/18, C08L 101/00, C08L 23/00, C08L 15/00, C08L 53/02, B32B 25/08

(54) **TRANSPARENT SHEET AND PROCESS FOR PRODUCING THE SAME**

(30) Priority: 13.06.2003 JP 2003169785
(71) Applicant: JSR Corporation, Tokyo 104-8410 (JP)
(72) Inventor: SUZUKI, Masanori, c/o JSR Corporation, Tokyo 1048410 (JP); MORIKAWA, Akihiko, c/o JSR Corporation, Tokyo 1048410 (JP); KAWATA, Takashi, c/o JSR Corporation, Tokyo 1048410 (JP)
(74) Representative: TBK-Patent
(86) International application number: PCT/JP2004/008227
(87) International publication number: WO 2004/111113

(57) **Abstract**

An object of the present invention is to.provide a transparent sheet which is excellent in transparency, and is also excellent in impact resistance and viscoelasticity, and a method for producing thereof. The transparent sheet of the present invention comprises a transparent flexible composition layer having 500 to 5,000 parts by mass of a liquid material (B) based on 100 parts by mass of a thermoplastic elastomer component (A) containing at least one elastomer (A-1) selected from the group consisting of a hydrogenated block polymer of a conjugated diene, a hydrogenated block copolymer of an aromatic vinyl compound and a conjugated diene, and an ethylene·**α-**olefin-based rubber, and other elastomer (A-2), and having a total transmittance of 90% or higher at 25°C and at a thickness of 0.5 mm, and a transparent resin layer on surface of the transparent flexible composition layer. The present transparent sheet is obtained by laminating a transparent resin layer on the transparent flexible composition layer and put them on pressure as needed.

## Description

### [Technical Field]

The present invention relates to a transparent sheet and a method for producing thereof, and more particularly, it relates to a transparent sheet which is excellent in transparency, and is also excellent in impact resistance and viscoelasticity, and a method for producing thereof.

### [Background Art]

Materials having low hardness represented by rubber are conventionally used in a variety of fields. In order to obtain a physical property suitable for use in a variety of fields, materials having various structures or compositions comprising various components in combination have been developed. For example, in the following Patent Document 1, a flexible composition comprising a specific hydrogenated block copolymer and a liquid additive such as paraffin-based process oil at a specific ratio is disclosed. Further, it is described that such a flexible composition is excellent in flexibility, a low-molecular compound retaining property, a dynamic property, hot melt tackiness and adhesive property, and a liquid retaining property. In addition, in the following Patent Document 2, a polymer having network structure in which a low-molecular material such as paraffin oil is held between three-dimensional continuous network made of a specific thermoplastic block copolymer, and which is used for a cushioning material and the like is disclosed. Further, in the following Patent Document 3, a rubber composition obtained by mixing a polymer having network structure disclosed in the following Patent Document 2 and a rubber material is disclosed. It is disclosed that such a rubber composition is a low elastic rubber composition in which a low molecular material is dispersed homogenously, and bleed of the low molecular material is small while preferably retaining the low molecular material.

On the other hand, it is necessary to use a thin and alkali-free glass for a base layer such as a glass plate constituting a flat display panel represented by a liquid crystal panel; therefore, it is known that the base layer shows poor viscoelasticity, thus it is easy to be broken by pressing down or collision. Accordingly, in the case a flat display panel such as a liquid crystal panel, a plasma display and an EL panel is used for a portable device and the like, a transparent resin layer made of polycarbonate or acrylic was used conventionally in order to protect the display panel. In addition, as described in the following Patent Documents 4 and 5, a protective sheet for display panel in which a tackiness layer or the like is applied to one surface of a resin film, and which is attached on the surface of a display panel is known.

[Patent Document 1] JP-A-H09-263678
[Patent Document 2] JP-A-H08-127698
[Patent Document 3] JP-A-H08-127699
[Patent Document 4] JP-A-H04-030120
[Patent Document 5] JP-A-2000-56694

### [Disclosure of the Invention]

### [Problems to be solved by the Invention]

However, the protective sheet for display panel as shown in Patent Document 4 mentioned above is mainly used for protection in a state of package during transportation or protection of a stationary display, and it is not made for protection of a display panel for such as a cellular telephone. In addition, the protective sheet for display panel as shown in Patent Document 5 mentioned above can protect an article from an impact, a scratching and the like, however, descriptions of protection from an impact due to its collision against a floor by dropping, and a load that may be applied when being carried such as a user is seated while the device is in the user's hip pocket or the device is pressed down are not.

Further, in the case of using a transparent resin layer made of polycarbonate or acrylic in order to protect a display panel, even if such a transparent resin layer is provided, when the thickness of the transparent resin layer is thin, the strain of the transparent resin layer is transferred to the base layer, and the base layer was broken in some cases. On the other hand, with regard to a product for portable use such as a cellular telephone, it is preferred that a display panel is as thin as possible. From that point of view, means capable of making the thickness of a protective plate itself thin without causing damage of a display panel has been needed. In light of the circumstances mentioned above, it has been investigated that an impact absorbing layer, which has transparency that can ensure the visibility of the displayed content of a display panel and also can prevent the article from breakage due to pressing down of the base layer, collision and the like is provided. The development of a material that can be utilized as such an impact absorbing layer, namely, a rubber composition that is excellent in transparency and is also excellent in impact resistance and viscoelasticity has been investigated.

However, the fact is that a rubber composition which is excellent in impact resistance and viscoelasticity and can be utilized as an impact absorbing layer does not have sufficient transparency, on the other hand, a rubber composition having transparency is inferior in impact resistance and viscoelasticity. In addition, Patent Documents 1 to 3 mentioned above do not relate to a transparent flexible composition, and moreover, do not make any mention of, with regard to rubber compositions, necessity of achieving all the transparency, impact resistance and viscoelasticity, and means for realizing it. Therefore, conventionally, it was difficult to achieve all transparency, impact resistance and viscoelasticity for a rubber composition.

The present invention has been made in view of the above situations, and an object of the present invention is to provide a transparent sheet which are excellent in transparency, and are also excellent in impact resistance and viscoelasticity.

### [Means for solving problems]

The transparent sheet of the present invention is as follows.
[1] A transparent sheet, characterized in that it consists of a transparent flexible composition layer which comprises 500 to 5,000 parts by mass of a liquid material (B) based on 100 parts by mass of a thermoplastic elastomer component (A), and has a total transmittance of 90% or higher at 25°C and at a thickness of 0.5 mm.
[2] The transparent sheet according to [1] above, comprising a transparent resin layer on at least one surface of the above transparent flexible composition layer.
[3] The transparent sheet according to [1] above, comprising a removable protective film layer on at least one surface of a surface-exposed face among the above transparent flexible composition layer and the above transparent resin layer.
[4] The transparent sheet according to [1] above, wherein thickness of the above transparent flexible composition layer is 2.0 mm or less, and total thickness is 10 mm or less.
[5] The transparent sheet according to [1] above, wherein the above thermoplastic elastomer component (A) comprises at least one type of elastomer (A-1) selected from the group consisting of a hydrogenated block polymer of a conjugated diene, a hydrogenated block copolymer of an aromatic vinyl compound and a conjugated diene, and an ethylene·**α-**olefin-based rubber.
[6] The transparent sheet according to [5] above, wherein the above hydrogenated block polymer of a conjugated diene is a hydrogenated block polymer by hydrogenating a block polymer having, in its molecule, at least one butadiene polymer block (I) having a vinyl bond content of 5 to 25% in the block and at least one polymer block (II) having a mass ratio of a conjugated diene to other monomer of (100 to 50)/(0 to 50) and having a vinyl bond content of 25 to 95% by mass.
[7] The transparent sheet according to [5] above, wherein the above thermoplastic elastomer component (A) further comprises other elastomer (A-2).
[8] The transparent sheet according to [1] above, wherein the above liquid material (B) is a liquid material having a kinematic viscosity of not higher than 500 mm²/s at 40°C and being nonvolatile at a temperature between -100 and 50°C.
[9] A method for producing a transparent sheet, characterized by forming a transparent flexible composition layer by molding a transparent flexible composition which comprises 500 to 5,000 parts by mass of a liquid material (B) based on 100 parts by mass of a thermoplastic elastomer component (A), and has a total transmittance of 90% or higher at 25°C and at a thickness of 0.5 mm by an extrusion method, a coating method, a casting method, a press method, an injection molding method or an inflation method.
[10] The method for producing a transparent sheet according to [9] above, wherein a removable protective film layer is provided by laminating a protective film on at least one surface of the above transparent flexible composition layer and the above transparent resin layer.
[11] A method for producing a transparent sheet, characterized by laminating a transparent resin layer on at least one surface of a transparent flexible composition layer which comprises 500 to 5,000 parts by mass of a liquid material (B) based on 100 parts by mass of a thermoplastic elastomer component (A), and has a total transmittance of 90% or higher at 25°C and at a thickness of 0.5 mm.
[12] The method for producing a transparent sheet according to [11] above, wherein a removable protective film layer is provided by laminating a protective film on at least one surface of the above transparent flexible composition layer and the above transparent resin layer.

### [Effects of the Invention]

The transparent sheet of the present invention having the configuration mentioned above has an advantage in that it can be easily put on a surface protective plate and a base layer that are constituting a display panel and it is excellent in transparency and is also excellent in impact resistance and viscoelasticity.
In addition, the transparent sheet of the present invention having a transparent resin layer on at least one surface of the transparent flexible composition layer makes a degree of freedom for designs of case and the like increase, since a protective panel is provided and a gap is need not provide among the protective panel and a base layer as conventional. Additionally, comprising a removable protective film layer on at least one surface of a surface-exposed face among the transparent flexible composition layer makes the transparent flexible composition layer and the transparent resin layer protect, and easily lead to a structure having the transparent flexible composition by removing the protective sheet at the point of use and by putting it on a surface of other article to be attached.
Further, the transparent sheet of the present invention having thickness of the above transparent flexible composition layer of 2.0 mm or less, and total thickness of 10 mm or less can prevent a breakage due to an impact and the like even if the thickness is thinner than that of the conventional.
In addition, in the transparent sheet of the present invention, in the case where the thermoplastic elastomer component (A) contains at least one type of elastomer (A-1) selected from the hydrogenated block polymer of a conjugated diene mentioned above, the hydrogenated block polymer of an aromatic vinyl compound and a conjugated diene mentioned above and the ethylene·α-olefin rubber mentioned above, both impact resistance and viscoelasticity can be improved.
Moreover, in the transparent sheet of the present invention, in the case where the hydrogenated block polymer of a conjugated diene is a hydrogenated block polymer by hydrogenating a block polymer having, in its molecule, at least one butadiene polymer block (I) having a vinyl bond content of 5 to 25% in the block and at least one polymer block (II) having a mass ratio of a conjugated diene to other monomer of (100 to 50)/(0 to 50) and having a vinyl bond content of 25 to 95% by mass, it can be excellent in transparency and also impact resistance and viscoelasticity can be improved.
Further, in the transparent sheet of the present invention, in the case where the thermoplastic elastomer component (A) mentioned above further comprises other elastomer (A-2), impact resistance and viscoelasticity can be further improved while the excellent transparency is maintained.
Additionally, in the transparent sheet of the present invention, in the case where the liquid material (B) mentioned above is a liquid material having a kinematic viscosity of not higher than 500 mm²/s at 40°C and being nonvolatile at a temperature between -100 and 50°C, a transparent sheet having a transparent flexible composition layer which is excellent in transparency within a broad temperature range and is also excellent in impact resistance and viscoelasticity can be offered.

According to the method for producing a transparent sheet, a transparent sheet having characterizations mentioned above can be easily produced.

### [Brief Description of Drawings]

[Fig.1] It is a cross-sectional schematic view of one example of a transparent sheet of the present invention.
[Fig.2] It is a cross-sectional schematic view of one example of a transparent sheet of the present invention.
[Fig.3] It is a cross-sectional schematic view of one example of a transparent sheet of the present invention.
[Fig.4] It is a cross-sectional schematic view of one example of a transparent sheet of the present invention.
[Fig.5] It is a cross-sectional schematic view of one example of a transparent sheet of the present invention.
[Fig.6] It is a schematic view for illustrating an impact resistance test of the present Example.

### [Description of Reference Numerals and Signs]

1, 1A, 1B, 1C, 1D and 1E; transparent sheet, 11; transparent flexible composition layer, 12; transparent resin layer, 13; protective film layer, 2; base layer, 3; acrylic plate, 61; elastic plate, 62; base platform, 7; golf ball.

### [Best Mode for Carrying Out the Invention]

Hereunder, the present invention will be explained in more detail.

### (1) Thermoplastic elastomer component (A)

The thermoplastic elastomer component (A) mentioned above is an elastomer having thermoplasticity, and the transparent sheet of the present invention by comprising the thermoplastic elastomer component (A) mentioned above can maintain the shape of the transparent flexible composition constituting the transparent flexible composition layer mentioned above even if it comprises a liquid material (B) described later. In the transparent flexible composition mentioned above, it is considered that the thermoplastic elastomer component (A) mentioned above forms a three-dimensional network. In addition, in the case where the thermoplastic elastomer component (A) mentioned above forms a three-dimensional network, the thermoplastic elastomer component (A) mentioned above may have a three-dimensional network at a stage where the transparent flexible composition mentioned above is obtained. In other words, it is not necessary that the thermoplastic elastomer component itself, which is a constituent of the thermoplastic elastomer component (A) mentioned above, have a three-dimensional network.

As long as the thermoplastic elastomer component (A) mentioned above is a thermoplastic elastomer, there is no particular restriction on the type, material and structure thereof. However, in order to maintain excellent transparency, a thermoplastic elastomer having a total transmittance at 25°C and at a thickness of 0.5 mm of 90% or higher, preferably 91% or higher, more preferably 92% or higher, and even more preferably 93% or higher can be preferably used. In addition, the thermoplastic elastomer component (A) mentioned above is preferably a thermoplastic elastomer component having a branched structure in terms of improvement of the impact resistance. Further, weight average molecular weight of the thermoplastic elastomer component (A) mentioned above in terms of polystyrene by gel permeation chromatography is generally from 10,000 to 800,000, preferably from 30,000 to 700,000, more preferably from 30,000 to 500,000 and even more preferably from 50,000 to 400,000. By setting the weight average molecular weight of the thermoplastic elastomer component (A) mentioned above within the range mentioned above, a transparent flexible composition which is excellent in mechanical properties can be offered; therefore it is preferred.

The thermoplastic elastomer component (A) mentioned above may be one single type of an elastomer component or contain two or more types of elastomer components. As the thermoplastic elastomer component (A) mentioned above, for example, one or more types of a hydrogenated block polymer of a conjugated diene, a hydrogenated block copolymer of an aromatic vinyl compound and a conjugated diene, an ethylene·α-olefin-based rubber, a nitrile-based rubber such as acronitrile-butadiene-based rubber, an acrylic-based rubber, a thermoplastic polyolefin elastomer (TPO), a thermoplastic polyurethane elastomer (TPU), a thermoplastic polyester elastomer (TPEE), a polyamide elastomer (TPAE), a diene-based elastomer (1,2-polybutadiene, etc.) and the like can be exemplified. In particular, as the thermoplastic elastomer component (A) mentioned above, the one containing at least one type of an elastomer (A-1) selected from a hydrogenated block polymer of a conjugated diene, a hydrogenated block polymer of an aromatic vinyl compound and a conjugated diene, and an ethylene·α-olefin rubber is preferred. In addition, it is preferred that the elastomer (A-1) mentioned above is also a polymer having a branched structure in terms of improvement of the impact resistance as described above.

The hydrogenated block polymer of a conjugated diene mentioned above is a polymer obtained by hydrogenating a polymer of one or more types of conjugated dienes or a copolymer of one or more types of conjugated dienes and other monomer. That is, the "hydrogenated block polymer" mentioned above is a concept that includes a hydrogenated block copolymer. In addition, the hydrogenated block copolymer of an aromatic vinyl compound and a conjugated diene mentioned above is a polymer obtained by hydrogenating a copolymer of one or more types of aromatic vinyl compounds and one or more types of conjugated dienes. It may be a polymer by hydrogenating a copolymer obtained by using other monomer than the aromatic vinyl compound mentioned above and the conjugated diene mentioned above. Incidentally, in the case where a conjugated diene and other monomer copolymerized, the distribution of the conjugated diene may be random, tapered (the ratio of the conjugated diene unit is increased or decreased along the molecular chain), block in part or an arbitrary combination of these.

As the conjugated diene mentioned above, for example, one or more types of 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, chloroprene and the like can be exemplified. Among these, in order to obtain a composition, which can be industrially used and is excellent in physical properties, preferred are 1,3-butadiene, isoprene and 1,3-pentadiene, and further preferred are 1,3-butadiene and isoprene. Incidentally, the conjugated diene monomer mentioned above may be used alone or in combination of two or more. In addition, as the aromatic vinyl compound mentioned above, for example, one or more types of styrene, t-butyl styrene, α-methyl styrene, α-chlorostyrene, p-methyl styrene, divinyl benzene, N,N-diethyl-p-aminostyrene, vinyl pyridine and the like can be exemplified. Among these, preferred are styrene and α-methyl styrene. In addition, the aromatic vinyl compound mentioned above may be used alone or in combination of two or more.

Further, vinyl bond contents (1,2-bond and 3,4-bond) of the hydrogenated block polymer of an conjugated diene mentioned above and the hydrogenated block copolymer of an aromatic vinyl compound and a conjugated diene mentioned above is preferably 10% or higher, more preferably 20% or higher, even more preferably 30% or higher and particularly preferably from 30 to 90%, respectively. By setting the vinyl bond mentioned above content within the range mentioned above, the impact resistance can be improved; therefore it is preferred.

In addition, it is preferred to use, as the hydrogenated block polymer of a conjugated diene mentioned above, a hydrogenated block polymer by hydrogenating a block polymer having, in its molecule, at least one butadiene polymer block (I) having a vinyl bond content of 5 to 25% in the block and at least one polymer block (II) having a mass ratio of a conjugated diene to other monomer of (100 to 50)/(0 to 50) and having a vinyl bond content of 25 to 95% by mass in terms of impact resistance and viscoelasticity. With regard to this hydrogenated block copolymer, one type may be used alone, or a blend of two or more types may be used.

In the butadiene polymer block (I) mentioned above, the vinyl bond content (content of 1,2-bond and 3,4-bond) of polybutadiene is from 5 to 25%, preferably from 5 to 20%, and more preferably from 7 to 19%. Accordingly, the butadiene polymer block (I) mentioned above becomes a crystalline block showing a structure similar to that of an ethylene-butene copolymer by hydrogenation. By setting the vinyl bond content mentioned above within the range mentioned above, the mechanical property and the shape-retentive property can be improved; therefore it is preferred. Incidentally, "%" for the vinyl bond content means % by mass or % by mole. That is, in the case where a difference occurs between the case where the vinyl bond content is represented by % by mass and the case where it is represented by % by mole, either may be included in the range mentioned above.

In addition, in the polymer block (II) mentioned above, the vinyl bond content (content of 1,2-bond and 3,4-bond) is generally from 25 to 95% by mass, preferably from 25 to 90% by mass, and more preferably from 30 to 85% by mass. Accordingly, the polymer block (II) mentioned above becomes a polymer block having a strong amorphous property showing a structure similar to that of a rubber-like ethylene-butene copolymer block by hydrogenation in the case where the conjugated diene is, for example, 1,3-butadiene. By setting the content within the range mentioned above, a composition which is extremely excellent in a mechanical property can be obtained. Further, the mass ratio of the conjugated diene to the other monomer mentioned above is from 100/0 to 50/50, preferably from 100/0 to 70/30 and more preferably from 100/0 to 90/10. By setting the content within the range mentioned above, the transparency is maintained, and also the impact resistance and the viscoelasticity can be improved; therefore it is preferred.

In the above-mentioned block copolymer having, in its molecule, at least one butadiene polymer block (I) and at least one polymer block (II), the content of the polymer block (II) mentioned above is preferably from 30 to 90% by mass, more preferably from 40 to 90% by mass, even more preferably from 50 to 90% by mass, still even more preferably from 50 to 85% by mass, and particularly preferably from 60 to 85% by mass. By setting the content of the polymer block (II) within the range mentioned above, the shape-retentive property and the mechanical property can be improved.

In addition, the structure of the above-mentioned block copolymer having, in its molecule, at least one butadiene polymer block (I) and at least one polymer block (II) may be any one as long as it satisfies the requirements mentioned above. Examples thereof include block copolymers represented by the general formulae, (A-B)n₁, (A-B)ₙ₂-A, (B-A)ₙ₃-B (in the formulae, A represents a butadiene polymer block (I), B represents the polymer block (II), and n1 to n3 represent an integer of 1 or more) and the like. Incidentally, as the above-mentioned block copolymer having, in its molecule, at least one butadiene polymer block (I) and at least one polymer block (II), a copolymer comprising three blocks (triblock) or more is particularly excellent in shape-retentive property and mechanical property; therefore it is preferred. Accordingly, in the general formulae mentioned above, the case where n1 is an integer of 2 or more is particularly preferred. In addition, the above-mentioned block copolymer having, in its molecule, at least one butadiene polymer block (I) and at least one polymer block (II) may have at least one butadiene polymer block (I) and at least one polymer block (II) in its molecule, and also can have other block, particularly a block containing not less than 50% by mass of other monomer than the other conjugated dienes.

In addition, the above-mentioned block copolymer having, in its molecule, at least one butadiene polymer block (I) and at least one polymer block (II) may be, for example, the one in which the polymer molecular chain is extended or branched via a residue of a coupling agent such as (A-B)ₘX, (B-A)ₘX, (A-B-A)ₘX, and (B-A-B)ₘX. In each of the formulae mentioned above, A and B represents the same as above, m represents an integer of 2 or more, and X represents a residue of a coupling agent. Particularly in the case where m is 3 or more, a composition which is excellent in shape-retentive property, and hot melt viscosity and adhesion can be obtained. Examples of the coupling agent mentioned above include, for example, 1,2-dibromoethane, methyldichlorosilane, trichlorosilane, methyltrichlorosilane, tetrachlorosilane, tetramethoxysilane, divinyl benzene, diethyl adipate, dioctyl adipate, benzene-1,2,4-triisocyanate, tolylenediisocyanate, epoxidized 1,2-polybutadiene, epoxidized linseed oil, germanium tetrachloride, tin tetrachloride, butyltrichlorotin, butyltrichlorosilane, dimethylchlorosilane, 1,4-chloromethylbenzene, bis(trichlorosilyl)ethane and the like.

The degree of hydrogenation of the hydrogenated block polymer of a conjugated diene mentioned above or the hydrogenated block copolymer of an aromatic vinyl compound and a conjugated diene mentioned above is preferably 80% or higher, more preferably 85% or higher, and particularly preferably 90% or higher. By setting the degree of hydrogenation mentioned above to 80% or higher, the shape-retentive property and the mechanical property can be improved. In addition, it is possible to use a modified hydrogenated block polymer where at least one type of functional group was introduced into this hydrogenated block polymer as the hydrogenated block polymer of a conjugated diene mentioned above. The hydrogenated block polymer of a conjugated diene mentioned above can be obtained by a method disclosed in, for example, JP-A-H02-133406, JP-A-H03-128957 and JP-A-H05-170844.

Specific examples of the hydrogenated block polymer of a conjugated diene mentioned above include, for example, a hydrogenated block copolymer of a butadiene block copolymer (CEBC), a hydrogenated block copolymer of a butadiene-isoprene-butadiene copolymer, a styrene-based elastomer such as a hydrogenated block copolymer of a styrene-butadiene-styrene block copolymer (SEBS), and the like. In the case of a hydrogenated block polymer of a conjugated diene obtained by (co)polymerization without using, as a monomer, an aromatic vinyl compound such as styrene, the ratio of the liquid material (B) mentioned above can be increased, and as a result, the impact resistance and the viscoelasticity of the transparent sheet of the present invention can be improved. Therefore, as the hydrogenated block polymer of a conjugated diene mentioned above, a hydrogenated block polymer of a conjugated diene which does not comprise an aromatic vinyl monomer unit is preferred.

The ethylene·**α**-olefin-based rubber mentioned above is a copolymer of ethylene and an **α**-olefin except for ethylene. As the **α-**olefin mentioned above, an **α**-olefin having 3 to 12 carbon atoms such as propylene, 1-butene, 1-pentene, 3-methyl-1-butene, 1-hexene, 3-methyl-1-pentene, 4-methyl-1-pentene, 3-ethyl-1-pentene, 1-octene, 1-decene and 1-undecene can be exemplified. Among these monomers, preferred are propylene and 1-butene. The monomers mentioned above may be used alone or in combination of two or more. In addition, as the ethylene·**α**-olefin rubber mentioned above, a polar group-containing ethylene·**α**-olefin rubber that has a polar group in its constitution may be used. Examples of the polar group mentioned above include, for example, a hydroxyl group, an epoxy group, an amino group, a carboxyl group, an alkoxysilyl group, a nitrile group and the like. In addition, in this polar group-containing ethylene·α-olefin rubber, one type of the polar groups mentioned above may be contained, or two or more different types of the polar groups mentioned above may be contained.

Incidentally, the ethylene·α-olefin rubber mentioned above may be the one obtained by copolymerizing other monomer than ethylene and an α-olefin such as an ethylene·**α**-olefin-diene copolymer. As the other monomer mentioned above, a nonconjugated dienesuch as 1,4-pentadiene, 1,4-hexadiene, 1,5-hexadiene, 1,7-octadiene, 1,9-decadiene, 3,6-dimethyl-1,7-octadiene, 4,5-dimethyl-1,7-octadiene, 5-methyl-1,8-nonadiene, dicyclopentadiene, 5-ethylidene-2-norbornene, 5-vinyl-2-norbornene and 2,5-norbornadiene; a polar group-containing monomer such as maleic anhydride and (metha)acrylic acid; and the like can be exemplified. Among these, preferred are dicyclopentadiene and 5-ethylidene-2-norbornene. One type may be used alone or two or more types may be used in combination. Incidentally, as the polar group contained in the polar group-containing monomer, polar groups which have been exemplified in the section of the above-mentioned polar group-containing ethylene·α-olefin rubber mentioned above can be cited.

In the case where the themoplastic elastomer component (A) mentioned above is an elastomer composition comprising the elastomer (A-1) mentioned above, the elastomer composition may further comprise other elastomer (A-2). The other elastomer (A-2) mentioned above may be used alone or in combination of two or more. By containing the other elastomer (A-2) mentioned above, the impact resistance and the viscoelasticity can be further improved; therefore it is preferred. In addition, in the case where the thermoplastic elastomer component (A) mentioned above forms a three-dimensional network, the other elastomer (A-2) mentioned above may be an elastomer that forms a three-dimensional network or may be an elastomer that does not form a three-dimensional network.

As long as the other elastomer (A-2) mentioned above is an elastomer other than the elastomer (A-1) mentioned above, there is no particularly restriction on the type thereof, however, as described above, in terms of the improvement of the impact resistance, an elastomer having a branched structure is preferred. As the other elastomer (A-2) mentioned above, one or more types of, for example, a butyl rubber, an ethylene-octene copolymer, polyhexene and the like can be exemplified. Among these, a butyl rubber is preferred.

As the butyl rubber mentioned above, other than a polymer of isobutylene or a partially crosslinked polymer thereof, a copolymer of isobutylene and other monomer or a partially crosslinked polymer thereof can be exemplified. As the above-mentioned copolymer of isobutylene and other monomer or a partially crosslinked polymer thereof, for example, a copolymer of isobutylene and isoprene, a copolymer of isobutylene, isoprene and a polar group-containing monomer, a partially crosslinked copolymer thereof and the like can be exemplified. As the polar group-containing monomer mentioned above (copolymerizable monomer having a polar group), a monomer having one or more types of a hydroxyl group, an epoxy group, an amino group, a carboxyl group, an alkoxysilyl group, a nitrile group and the like can be exemplified. In addition, the partially crosslinked copolymer mentioned above can be obtained by copolymerizing a monomer and a multifunctional unsaturated bond-containing monomer. Examples of the monomer in the multifunctional unsaturated bond-containing monomer include a polyvalent allyl compound, a polyvalent (metha)acrylate compound, a divinyl compound, a bismaleimide compound, a dioxime compound and the like. As the butyl rubber mentioned above, specifically, for example, one or more types of an isobutylene-isoprene copolymer, a chlorinated isobutylene-isoprene copolymer, a brominated isobutylene-isoprene copolymer and the like can be exemplified.

In the case where the thermoplastic elastomer component (A) mentioned above is an elastomer composition comprising the elastomer (A-1) mentioned above and the other elastomer (A-2) mentioned above, the content ratio of the elastomer (A-1) mentioned above is generally from 30 to 95% by mass, preferably from 40 to 85% by mass, more preferably from 50 to 85% by mass, even more preferably from 50 to 80% by mass, and particularly preferably from 55 to 80% by mass (with the proviso that (the elastomer (A-1) mentioned above) + (the other elastomer (A-2) mentioned above) = 100% by mass). In addition, the content ratio of the other elastomer (A-2) mentioned above is generally from 5 to 70% by mass, preferably from 15 to 60% by mass, more preferably from 15 to 50% by mass, even more preferably from 20 to 50% by mass, and particularly preferably from 20 to 45% by mass. By setting the content ratios of the elastomer (A-1) mentioned above and the other elastomer (A-2) mentioned above within the ranges mentioned above, a transparent flexible composition having an excellent balance of transparency, impact resistance and viscoelasticity can be offered; therefore it is preferred.

### (2) Liquid material (B)

The liquid material (B) mentioned above contained in the transparent flexible composition mentioned above is a substance in the form of liquid or paste at 25°C, and comprising the liquid material (B) mentioned above leads to an improved impact resistance of the composition while the transparency is maintained. In the transparent flexible composition mentioned above, it is considered that the liquid material (B) exists by being retained in the thermoplastic elastomer component (A). More specifically, in the transparent flexible composition mentioned above, it is considered that the thermoplastic elastomer component (A) mentioned above forms a three-dimensional network, and the liquid material (B) mentioned above is retained in this three-dimensional network.

The liquid material (B) mentioned above is generally transparent, however, as long as it can achieve the total transmittance of the transparent flexible composition mentioned above of 90% or higher at 25°C and at a thickness of 0.5 mm, it is not particularly limited to a transparent material. In addition, as long as the liquid material (B) mentioned above is in the form of liquid or paste at 25°C, there is no particular restriction on the type. More specifically, the liquid material (B) mentioned above is a nonvolatile (in the form of liquid) liquid material generally at a temperature between -100 and 50°C, preferably between -80 and 50°C, and more preferably between -50 and 50°C, and there is no restriction on the type thereof. In addition, the kinematic viscosity of the liquid material (B) mentioned above at 40°C is generally 500 mm²/s or lower, preferably 400 mm²/s or lower, and more preferably 0.1 to 100 mm²/s. By setting the kinematic viscosity of the liquid material (B) mentioned above at 40°C within the range mentioned above, the shape of the transparent flexible composition mentioned above can be maintained within a broad temperature range; therefore it is preferred. More specifically, as the liquid material (B) mentioned above, for example, a liquid material having a kinematic viscosity of not higher than 500 mm²/s at 40°C and being nonvolatile at a temperature between -100 and 50°C is preferred. Further, in terms of use in a low temperature environment, as the liquid material (B) mentioned above, preferred is the one having a pour point of not higher than -10°C, particularly not higher than -20°C, and still further not higher than -40°C, having a water content of not higher than 500 ppm, particularly not higher than 200 ppm, and still further not higher than 100 ppm, and having low impurity of a heavy metal or the like.

As the liquid material (B) mentioned above, specifically, for example, one or more types of a variety of lubricants for plastic or rubber, plasticizers, softeners, liquid oligomers and the like can be exemplified. Examples of the lubricant mentioned above include paraffin lubricants, hydrocarbon lubricants, metal soaps and the like. In addition, as the plasticizer mentioned above, one or more types of a variety of fatty acid derivatives such as phthalic acid derivatives, isophthalic acid derivatives, tetrahydrophthalic acid derivatives, adipic acid derivatives, sebacic acid derivatives, fumaric acid derivatives and citric acid derivatives can be exemplified. Further, as the softener mentioned above, one or more types of petroleum softeners such as paraffin-based process oils, mineral oil softeners such as ethylene-α-olefin cooligomers and gilsonite, fatty acids such as oleic acid and ricinoleic acid, and the like can be exemplified. In addition, as the liquid oligomer mentioned above, one or more types of polyisobutylene, a variety of liquid rubbers (polybutadiene, styrene-butadiene rubber and the like), silicone oils can be exemplified. As will be described later, the transparent sheet of the present invention is used for display that is used outdoors such as a cellular telephone in many cases. Therefore, in the case where as the liquid material (B) mentioned above, one or more types of oils without a double bond or oils containing only a small amount (specifically, 20% or less by mass, further, 10% or less by mass) of a component having a double bond such as paraffin-based process oils, paraffin-based synthetic oils and hydrogenated paraffin-based oils are used, a transparent flexible composition which is excellent in weatherability can be offered; therefore it is preferred. Incidentally, with regard to the liquid material (B) mentioned above, one type may be used alone, or two or more types may be used in combination.

The compounding amount of the liquid material (B) mentioned above in the transparent flexible composition mentioned above is from 500 to 5,000 parts by mass based on 100 parts by mass of the thermoplastic elastomer component (A) mentioned above, preferably from 500 to 4,000 parts by mass, more preferably from 500 to 3,000 parts by mass, even more preferably from 500 to 2,000 parts by mass, and particularly preferably from 600 to 1,800 parts by mass. In the case where the compounding amount of the liquid material (B) mentioned above is less than 500 parts by mass, the impact resistance and the viscoelasticity are decreased; therefore it is not preferred. On the other hand, in the case where the compounding amount of the liquid material (B) mentioned above exceeds 5,000 parts by mass, the liquid material (B) mentioned above may bleed out, and also it becomes difficult for the transparent flexible composition mentioned above to maintain the shape; therefore it is not preferred.

### (3) Transparent flexible composition

The transparent flexible composition contained in the transparent sheet of the present invention by having the configuration mentioned above has excellent transparency. Specifically, the transparent flexible composition mentioned above has a total transmittance at 25°C and at a thickness, of 0.5 mm of 90% or higher, preferably 91% or higher, and more preferably 92% or higher. In addition, the transparent flexible composition mentioned above has excellent transparency within a broad temperature range. Specifically, the transparent flexible composition mentioned above can maintain transparency at -100 to 90°C, preferably at -50 to 90°C, and more preferably at -40 to 90°C (the total transmittance at a thickness of 0.5 mm is 90% or higher, preferably 91% or higher, and more preferably 92% or higher). Incidentally, the total transmittance mentioned above is represented by the value measured by the method described in Examples.

In addition, the transparent flexible composition mentioned above by having the configuration mentioned above shows excellent viscoelasticity. Specifically, the transparent flexible composition mentioned above allows the storage shear modulus (G') in dynamic viscoelastic measurement at 30°C and 1 Hz measured by the method described in the following Examples to be 200,000 dyn/cm² or lower, preferably 150,000 dyn/cm² or lower, and more preferably 100,000 dyn/cm² or lower. In addition, the transparent flexible composition mentioned above allows the loss tangent (tanδ) in dynamic viscoelastic measurement at 30°C and 1 Hz measured by the method described in the following Examples to be 0.03 or higher, preferably 0.04 or higher, and more preferably 0.05 or higher. Further, the transparent flexible composition mentioned above allows the falling ball height measured by the method described in the following Examples to be 30 cm or higher, preferably 40 cm or higher, and more preferably 55 cm or higher.

The above-mentioned tanδ, G' and falling ball height can be appropriately adjusted by, for example, using the other elastomer component (A-2) mentioned above such as a butyl rubber in combination, or by a method of changing the content ratio of the thermoplastic elastomer component (A) mentioned above to the liquid material (B) mentioned above.

For the transparent flexible composition mentioned above, the thermoplastic elastomer component (A) mentioned above and the liquid material (B) mentioned above must be needed. However, as long as it has a total transmittance at 25°C and at a thickness of 0.5 mm of 90% or higher, it may contain other component. As the other component mentioned above, for example, a colorant may be added, whereby the composition can be colored. Accordingly, in the case where the transparent flexible composition mentioned above is used, the design can be improved. Other than this, for example, an antioxidant, a weather stabilizer, a metal deactivator, a light stabilizer, a UV absorber, a stabilizer such as a thermostabilizer, an antibacterial or antifungal agent, a dispersant, a plasticizer, a crosslinking agent, a co-crosslinking agent, a vulcanizer, a vulcanization aid, a blowing agent, a blowing aid or the like can be used.

A method of obtaining the transparent flexible composition mentioned above is not particularly limited, and it can be obtained by any of a variety of methods as needed. In general, the thermoplastic elastomer component (A) mentioned above and the liquid material (B) mentioned above may be mixed by an appropriate method, if necessary by adding other component. In addition, they may be mixed under conditions that enable the thermoplastic elastomer component (A) mentioned above to form a three-dimensional network. Further, since the transparent flexible composition mentioned above is a blended substance of a material essentially having a low viscosity at a high temperature and a polymer material, it is preferred to use an apparatus capable of stirring a liquid material at a high speed for mixing each component. More specifically, as the method of obtaining the transparent flexible composition mentioned above, by stirring the thermoplastic elastomer component (A) mentioned above and the liquid material (B) mentioned above, if necessary by adding other component, with a homomixer or the like at a temperature of 80 to 200°C, preferably 90 to 190°C under shear at a rotation rate of 10 rpm or higher, preferably 30 rpm or higher, it can be prepared. In addition; a molded article of the transparent flexible composition mentioned above can be easily produced by a conventionally known processing method such as compression molding and injection molding.

### (4) Transparent sheet

The transparent sheet of the present invention has a transparent flexible composition layer consisting of the transparent flexible composition mentioned above. The transparent flexible composition layer mentioned above may be only one layer or may comprise two or more layers in which transparent flexible compositions of the same material or different materials are laminated. In addition, in the present invention, the thickness of the transparent flexible composition layer mentioned above is not particularly limited, and can be various thicknesses according to the intended purpose. Therefore, in the present invention, "sheet" is a concept that includes not only the form of sheet but also the form of film. That is, the transparent sheet of the present invention is a concept that includes a transparent film. The thickness of the transparent flexible composition layer mentioned above is not particularly limited, and generally in the range from 0.1 to 2 mm, preferably from 0.2 to 0.8 mm, and more preferably from 0.3 to 0.5 mm.

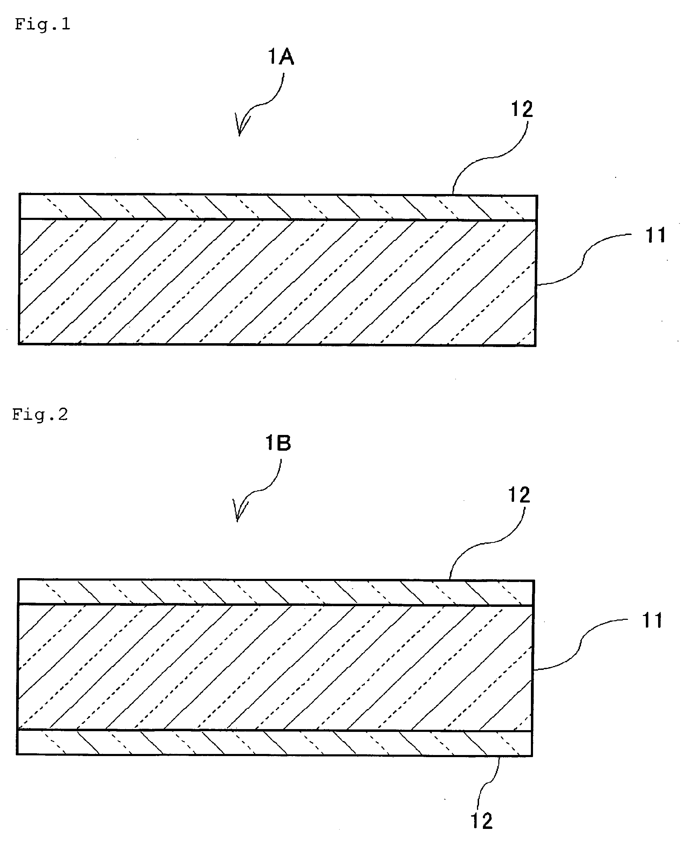

In the transparent sheet of the present invention, a transparent resin layer can be provided on at least one surface of the transparent flexible composition layer mentioned above. The transparent resin layer mentioned above may be provided on at least one surface of the transparent flexible composition layer mentioned above. That is, as shown in Fig.1, the transparent resin layer may be provided on only one surface of the transparent flexible composition layer mentioned above, or as shown in Fig.2, the transparent resin layer may be provided on both surfaces of the transparent flexible composition layer mentioned above. In addition, the transparency of the transparent resin layer mentioned above may be at a level that does not inhibit the visibility of the displayed content of a display panel or the like to a large extent. With regard to the transparency of the transparent resin layer mentioned above, the total transmittance thereof at 25°C measured by the method described in Examples is preferably 80% or higher, more preferably 85% or higher, further more preferably 90% or higher, and particularly preferably 91% or higher. Further, the thickness of the transparent resin layer mentioned above is not particularly limited, and is generally 2.0 mm or less, preferably 1.3 mm or less, more preferably 1.0 mm or less, and particularly preferably from 0.05 to 0.7 mm.

The material, form and structure of a transparent resin constituting the transparent resin layer mentioned above are not particularly limited, either. As described later, the transparent sheet of the present invention can be preferably used for a display panel of electrical or electronic equipment in particular. Further, with regard to a display panel for a cellular telephone or the like in particular, a load may be applied to the display panel when a user is seated while the device is in the user's hip pocket, or the like, therefore it is preferred that the transparent resin mentioned above has a flexibility capable of resisting the applied load. In addition, the transparent resin mentioned above may be in the form of sheet or in the form of film. Further, the transparent resin mentioned above may have a monolayer structure or may have a multilayer structure of two or more layers, in which transparent resins of the same material or different materials are laminated. In addition, in the case where the transparent resin layer mentioned above is provided on both surfaces of the transparent flexible composition mentioned above, a transparent resin of the same material may be used for both surfaces, or transparent resins of different materials may be used for one surface and for the other surface, respectively.

Specific examples of the transparent resin constituting the transparent resin layer mentioned above include, for example, polycarbonate-based resin, acrylic-based resin such as polymethyl methacrylate, 1,2-polybutadiene resin, polyvinyl chloride resin, cyclic olefin copolymer, modified norbornene-based resin, norbornene-based resin, alicyclic acrylic resin, amorphous polyolefins such as polycyclohexylethylene, amorphous fluororesin, polystyrene-based resin, transparent ABS resin, polyethylene terephthalate, polyethylene naphthalate, amorphous copolyesters, polyarylate, polymethylpentene, polysulfone, polyethersulfone, polyetherimide, cellulose acetate, allyl diglycol carbonate resin, ethylene-vinyl acetate copolymer (EVA, generally containing 3% by mass or higher of vinyl acetate unit), polyolefin-based resin such as polyethylene and polypropylene, vinyl ester-based resin (excluding EVA), amorphous polyamide-based resin, urethane resin, epoxy resin, unsaturated polyester-based resin, silicon-based resin and the like. Among these, resin such as polycarbonate resin and polyacrylic-based resin are preferred.

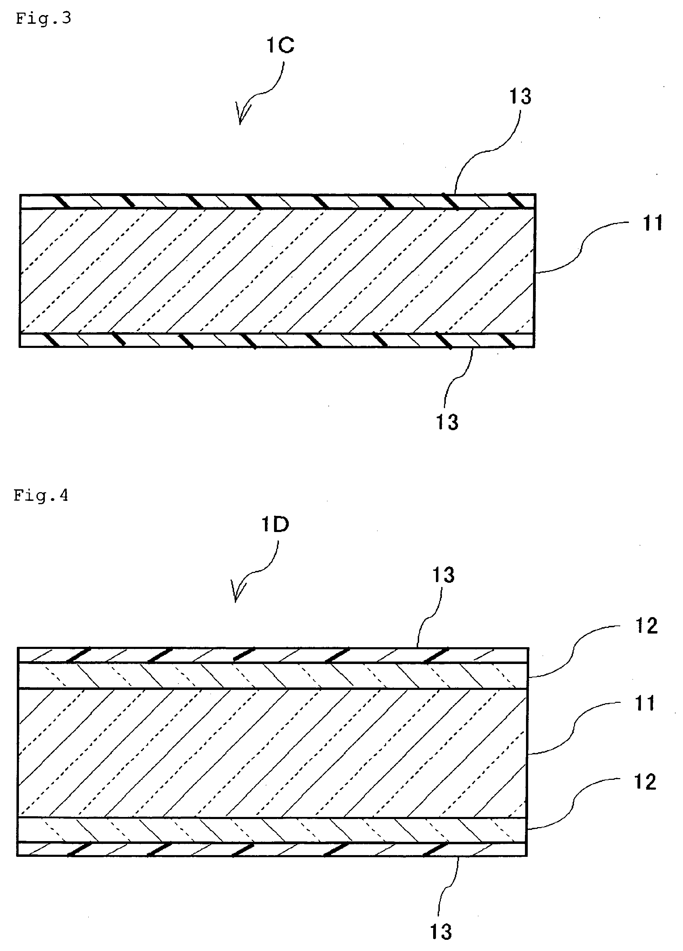

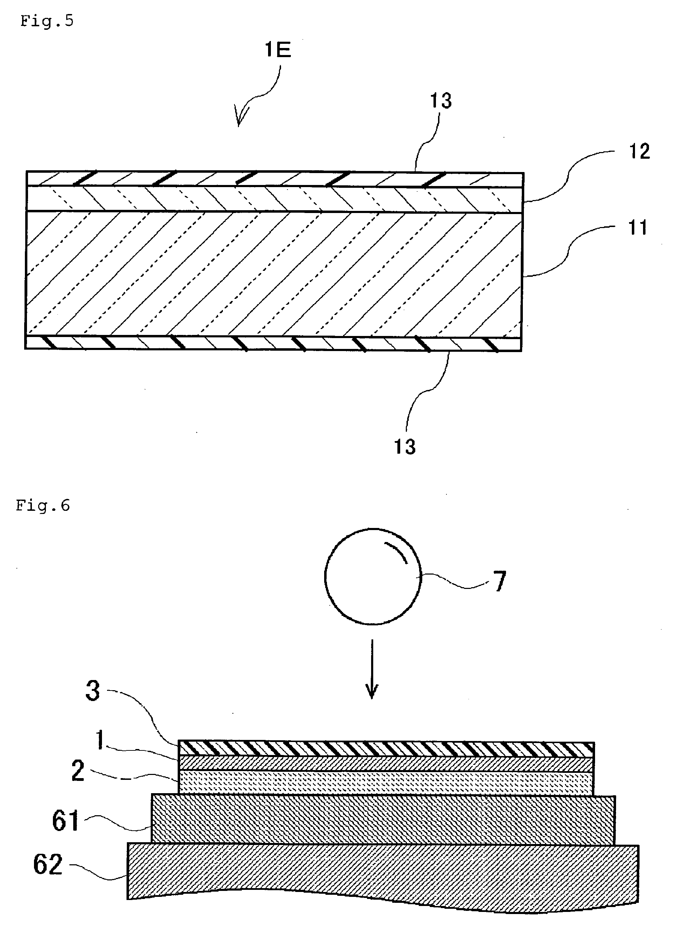

As for the transparent sheet of the present invention, a removable protective film layer can be provided on at least one surface of the surface-exposed faces among the transparent flexible composition layer mentioned above and the transparent resin layer mentioned above. For example, as shown in Fig.3, the protective film layers 13 mentioned above can be provided on the surfaces of the transparent flexible composition layer 11 mentioned above. In addition, as shown in Fig.4, in the case of having the transparent resin layers 12 mentioned above, the protective film layers 13 mentioned above can be provided on the surfaces of the transparent resin layers 12 mentioned above. Further, as shown in Fig.5, in the case where the transparent resin layer 12 mentioned above is provided only on one surface of the transparent flexible composition layer 11 mentioned above, the protective film layers 13 mentioned above can be provided on the surfaces of the transparent flexible composition layer 11 mentioned above and the transparent resin layer 12 mentioned above. Incidentally, protective film layers in Figs.3 to 5 are provided on both surface-exposed faces in all cases, however, it may be provided only on either one of the surface-exposed faces. Comprising such a protective film layer can prevent a breakage of the transparent flexible composition layer mentioned above and the transparent resin layer mentioned above before using, and easily lead to a structure having the transparent flexible composition layer by removing the protective film layer mentioned above at the point of use and by putting it on a surface of other article to be attached.

The material, form and structure of the protective film layer mentioned above are not particularly limited. For example, as the material of the protective film layer mentioned above, a resin including polyester such as PET (polyethylene terephthalate), polyamide, polyimide, polyolefin, polycarbonate, acrylic-based resin and fluororesin, or a resin-impregnated paper which is obtained by impregnating a resin in a paper, and the like can be exemplified. Incidentally, the protective film layer-mentioned above may be transparent or may not be transparent. In addition, the protective film layer mentioned above may be in the form of sheet or in the form of film. Further, the protective film layer mentioned above may have a monolayer structure or may be a laminate having two or more layers. For example, as the laminate, a laminate in which a rubber film is laminated on at least one surface of a base material film as described in the Patent Document 5 mentioned above, and the like can be exemplified. In addition, in the transparent sheet of the present invention, in the case where it comprises two or more of the above-mentioned protective film layers, each protective film layer may be of the same material, form and structure, or protective film layers of different material, form or structure may be used in combination.

In addition, a removable layer between the protective film layer mentioned above and the surface-exposed face among the transparent flexible composition layer mentioned above and the transparent resin layer mentioned above can be provided in order to facilitate the removing of the protective film layer mentioned above. A method of providing such a removable layer is not particularly limited. For example, the removable layer mentioned above can be provided by coating a removable coating agent on the surface of the protective film layer mentioned above or the surface-exposed face among the transparent flexible composition layer mentioned above and the transparent resin layer mentioned above. The type of the removable coating agent is not particularly limited. Specific examples of the removable coating agent mentioned above include, for example, a silicon-based coating agent, an inorganic coating agent, a fluorine coating agent, an organic inorganic hybrid coating agent and the like. Generally, the transparent sheet having the removable layer mentioned above can be obtained by providing the removable layer mentioned above on the surface of the protective film layer mentioned above, and laminating it on the surface-exposed face of the transparent flexible composition layer mentioned above or the transparent resin layer mentioned above. In this case, the removable layer mentioned above may be provided on the surface-exposed face of the transparent flexible composition layer mentioned above or the transparent resin layer mentioned above, instead of on the surface of the protective film layer mentioned above.

The thickness of the transparent sheet of the present invention is not particularly limited, and can be various thicknesses according to the intended purpose. The thickness of the transparent sheet of the present invention is, in total, generally 10 mm or less, preferably 5 mm or less, and more preferably from 0.1 to 3 mm.

A method for producing the transparent sheet of the present invention is not particularly limited. The transparent sheet of the present invention can be produced by subjecting the transparent flexible composition mentioned above to, for example, a general method of film molding such as an extrusion method, a coating method, a casting method, a press method, an injection molding method and an inflation method.

Methods for producing the transparent sheet of the present invention having the transparent resin layer mentioned above and the transparent sheet of the present invention having the protective film layer mentioned above are not particularly limited. As a method of providing the transparent resin layer mentioned above or the protective film layer mentioned above on the surface of the transparent flexible composition layer mentioned above, for example, a method of joining them by using an adhesive agent (or a tackifier), a method of directly joining them by using a hot press and a cold press (including the case of joining them by merely compressing) and the like can be exemplified. Other than these, a casting method (a solvent-free casting method and a solvent casting method), an extrusion method, a press molding method, an injection molding method, a casting method and the like can be exemplified.

Specifically, for example, a transparent resin layer is laminated on at least one surface of the transparent flexible composition layer mentioned above, and then pressuring is performed as needed to provide the transparent resin layer on at least one surface of the transparent flexible composition layer mentioned above, whereby the transparent sheet of the present invention can be obtained. In addition, a protective film layer is laminated on at least one surface among the transparent flexible composition layer mentioned above and the transparent resin layer mentioned above, and then pressuring is performed as needed to provide the removable protective film layer on at least one surface of the transparent flexible composition layer mentioned above and the transparent resin layer mentioned above, whereby the transparent sheet of the present invention can be obtained. Incidentally, "laminating" of a transparent resin layer or a protective film layer includes not only the case where a transparent resin layer or a protective film layer, which is in a completely solid state, is laminated, but also the case where a transparent resin or a protective film, which is in a liquid state or a semi-solid state by heating or the like, is placed on at least one surface of the transparent flexible composition layer mentioned above by a method such as coating, and then, it is made completely a solid state by cooling or the like.

The conditions of the pressuring mentioned above are not particularly limited. For example, the transparent flexible composition layer mentioned above is generally flexible itself and has adhesiveness, therefore, in the case where the transparent sheet is obtained by the method mentioned above, pressuring may be performed without heating, however, it is preferred to perform pressuring while heating. The transparent sheet of the present invention can be obtained by, for example, extruding a transparent resin layer in a semi-cured state by heating while carrying the transparent flexible composition layer mentioned above, or by supplying it with a doctor blade on the surface of the transparent flexible composition layer mentioned above, followed by attaching the transparent flexible composition layer mentioned above and the transparent resin layer mentioned above on pressure using a roller or the like, and then cooling it or the like. In addition, the transparent sheet of the present invention having the removable protective film layer mentioned above can be obtained by, for example, laminating the protective film layer mentioned above on the surface-exposed face of the transparent resin layer mentioned above or the transparent flexible composition layer mentioned above, while carrying the above-mentioned transparent sheet in which the transparent flexible composition layer mentioned above or a transparent resin (in a semi-cured state or in a cured state) was laminated, and by performing pressuring of the laminated article using a roller or the like. In this case, with regard to the protective film layer mentioned above, a removable layer may be provided on its surface in advance, and the protective film layer mentioned above may be laminated on the surface-exposed face of the transparent resin layer mentioned above or the transparent flexible composition layer mentioned above in such a manner that this removable layer is brought into contact with the transparent resin layer mentioned above or the transparent flexible composition layer mentioned above.

Further, the protective film layer mentioned above on at least one surface among the transparent flexible composition layer mentioned above and the transparent resin layer mentioned above can be provided by coating a transparent resin component-containing liquid that can be obtained by dissolving components constituting the protective film layer mentioned above in a solvent or by melting them on at least one surface among the transparent flexible composition layer mentioned above and the transparent resin layer mentioned above. In this case, the coating method is not particularly limited, and is generally performed using a roll coater.

Since the transparent sheet of the present invention comprising the transparent flexible composition mentioned above is excellent in transparency and has characterizations of excellent impact resistance and viscoelasticity, the transparent sheet of the present invention can be used in a wide variety of applications and members for which impact resistance and viscoelasticity as well as transparency are required. The transparent sheet of the present invention can be used in, for example, a variety of applications such as electrical or electronic equipment, medical equipment, an engineering and architectural material, a material relating to food and an office equipment part. More specifically, it can be used in, for example, a display panel for such as electrical or electronic equipment, a design case, a packaging material, a transparent displaying member for a variety of equipment or the like.

In addition, the transparent sheet of the present invention can be preferably used in a display panel for electrical or electronic equipment or the like in particular. An application of the display panel mentioned above is not particularly limited, and other than the application of a displaying functional unit such as a display for a desktop-type computer, an application of incorporating it into a cellular telephone, a personal digital assistant (so-called PDA, including a mobile device), a note-type computer, an in-vehicle computer, a touchscreen, a TV, a clock, a measuring equipment or the like can be exemplified. Further, the form such as portable or stationary does not matter. In addition, it is preferred that the display panel mentioned above is a display panel in the form of plate, however, the form does not matter. For example, it may by flat or curved. Further, examples of the type of display panel, a liquid crystal display panel, a plasma display panel, an electroluminescent (EL) display panel and the like can be exemplified.

### [Examples]

Hereunder, the present invention will be more specifically described with reference to Examples. Incidentally, the present invention is by no means limited to these Examples. In addition, in these Examples, "%" and "part" are by mass unless otherwise specified.

### (1) Production of transparent sheet

The following components were used as raw materials.

### <1> Elastomer (A-1)

By the method described below, hydrogenated block polymers 1 and 2, which are an elastomer (A-1) to be used in this Example, were produced. The composition and physical properties of the hydrogenated block polymer 1 and the hydrogenated block polymer 2 are shown in Table 1 below. The 1,2-bond content (bound styrene content) of the hydrogenated block polymer 1 mentioned above and the hydrogenated block polymer 2 mentioned above were obtained by Hampton method using infrared absorption spectrum method. In addition, the weight-average molecular weight of the elastomer (A-1) was calculated in terms of polystyrene using a gel permeation chromatography (GPC) (manufactured by TOSOH Corporation, "GMH_{HR}-H"). Further, the block ratio of the elastomer (A-1) was obtained by measuring the amount of heat of fusion of crystalline structure by DSC measurement and the degree of hydrogenation was calculated from ¹H-NMR at 100 MHz, using tetrachloroethylene as a solvent.

### [Hydrogenated block polymer 1]

Cyclohexane (25 kg), tetrahydrofuran (1.25 g), butadiene (1,500 g) and n-butyl lithium (4.5 g) were added into a nitrogen-replaced reactor whose inner volume was 50 L, and an adiabatic polymerization from 70°C was carried out. After the reaction was completed, the temperature was brought to 15°C and tetrahydrofuran (350 g) and 1,3-butadiene (3,500 g) were added and an adiabatic polymerization was carried out. After 30 minutes, methyldichlorosilane (3.23 g) was added and a reaction was carried out for 15 minutes. After the reaction was completed, 2 g of n-butyl lithium and hydrogen gas at a pressure of 0.4 MPa-G were supplied and the mixture was stirred for 20 minutes and living anion was made to be lithium hydride. The temperature of the reaction solution was brought to 90°C and a hydrogenation reaction was carried out by using a titanocene compound described in JP-A-2000-37632. At the time when hydrogen absorption was completed, the reaction solution was brought to normal temperature and normal atmosphere, and taken out of the reactor. Then, the reaction solution was added to water while stirring and the solvent was removed by steam stripping, whereby a hydrogenated block polymer 1, which is a hydrogenated diene polymer, was obtained. The degree of hydrogenation of the obtained hydrogenated block polymer 1 was 98%, the weight average molecular weight was 280,000, the vinyl bond content of polybutadiene block at the first stage of the polymerization before hydrogenation was 14%, and the vinyl bond content of polybutadiene block at the second stage of the polymerization before hydrogenation was 80%.

### [Hydrogenated block polymer 2]

Cyclohexane (25 kg), tetrahydrofuran (1.25 g), butadiene (1,000 g) and n-butyl lithium (4.00 g) were added into a nitrogen-replaced reactor whose inner volume was 50 L, and an adiabatic polymerization from 70°C was carried out. After the reaction was completed, the temperature was brought to 30°C and tetrahydrofuran (125 g) and 1,3-butadiene (4,000 g) were added and an adiabatic polymerization was carried out. After 30 minutes, methyldichlorosilane (2.87 g) was added and a reaction was carried out for 15 minutes. After the reaction was completed, 2 g of n-butyl lithium and hydrogen gas at a pressure of 0.4 MPa-G were supplied and the mixture was stirred for 20 minutes and living anion was made to be lithium hydride. The temperature of the reaction solution was brought to 90°C and a hydrogenation reaction was carried out by using a titanocene compound described in JP-A-2000-37632. At the time when hydrogen absorption was completed, the reaction solution was brought to normal temperature and normal atmosphere, and taken out of the reactor. Then, the reaction solution was added to water while stirring and the solvent was removed by steam stripping, whereby a hydrogenated block polymer 2, which is a hydrogenated diene polymer, was obtained. The degree of hydrogenation of the obtained hydrogenated block polymer 2 was 98%, the weight average molecular weight was 348,000, the vinyl bond content of polybutadiene block at the first stage of the polymerization before hydrogenation was 14%, and the vinyl bond content of polybutadiene block at the second stage of the polymerization before hydrogenation was 47%.

### <2> Other elastomer (A-2)

"Butyl rubber" ; trade name "JSR Butyl 268" manufactured by JSR Corporation.

### <3> Liquid material

"Liquid material 1" ; a paraffin-based process oil (trade name "Diana Process oil PW-90" manufactured by Idemitsu Kosan Co., kinetic viscosity at 40°C ; 95.54 mm²/s

"Liquid material 2" ; a paraffin-based process oil (manufactured by Idemitsu Kosan Co., trade name "Diana Process oil PW-32", kinetic viscosity at 40°C: 30.85 mm²/s)

Incidentally, the liquid materials 1 and 2 mentioned above are both nonvolatile at a temperature between -100 and 50°C.

Using each of the components mentioned above, these were blended at a ratio shown in Table 2. Then, the formulated was heated at 160°C under an atmosphere of nitrogen gas, and was mixed while stirring. Then, a deaeration was performed and each of the transparent sheets Nos.1 to 8 having a transparent flexible resin layer whose thickness is 0.5 mm was obtained by heating and pressure molding with a hot press at 120°C.

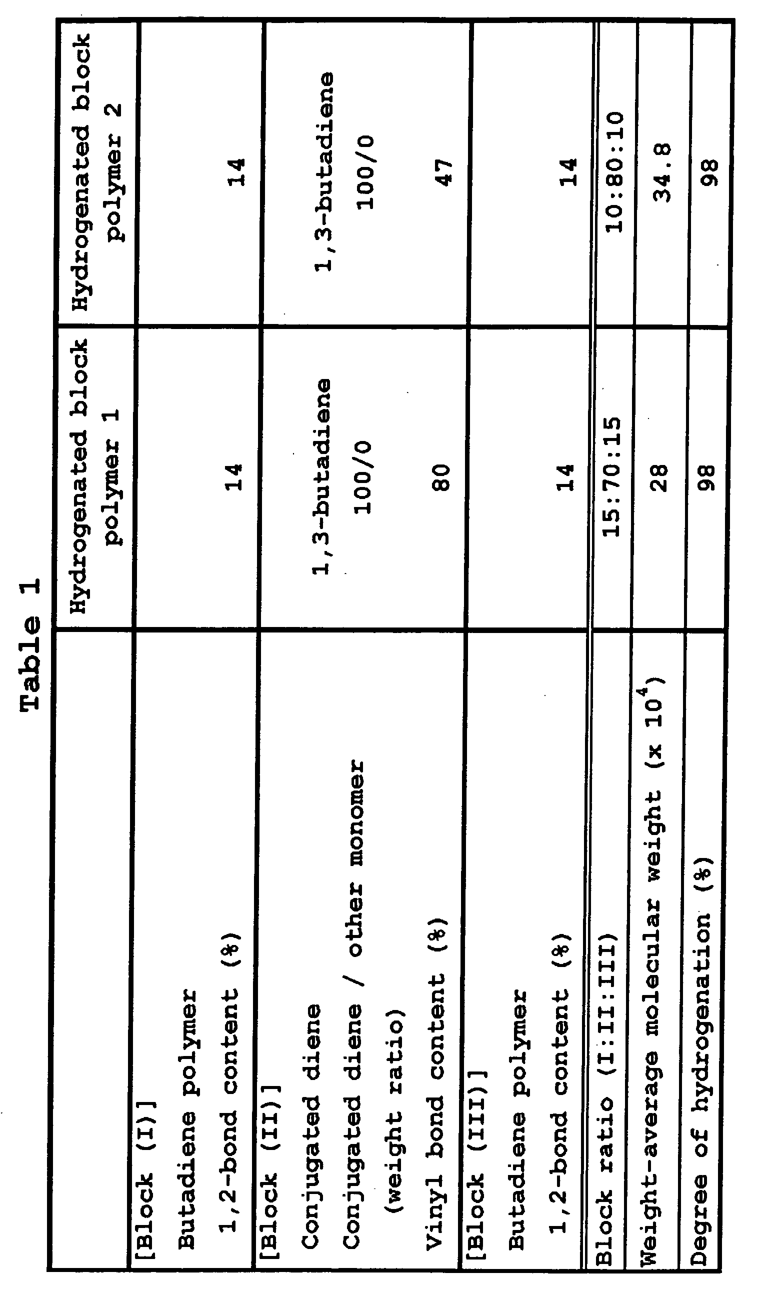

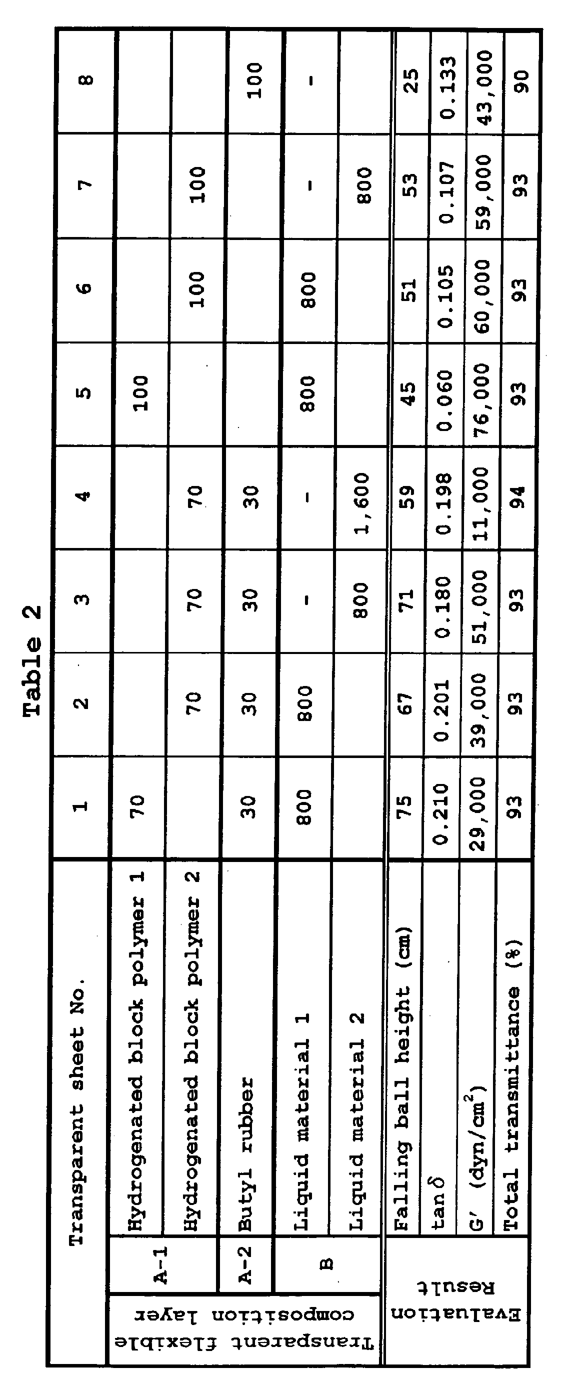

### (3) Evaluation of physical properties

Using each of the transparent sheets Nos.1 to 8 obtained by the method mentioned above, falling ball height, viscoelasticity and transparency were measured according to methods described below. The results are included in Table 2 above.

### [1] Impact resistance

As shown in Fig.6, a silicon rubber thin plate 61 (5.15 mm in thickness) was placed on a base platform 62 made of marble or the like, and a base layer 2 (trade name "Corning 1737" manufactured by Corning Incorporated), which is melt-molded aluminosilicate thin plate glass having a thickness of 0.7 mm, was placed thereon. Then, each transparent sheet 1 of transparent sheets Nos.1 to 8 (0.5 mm in thickness) was placed on the base layer 2. Further, an acrylic plate 3 having a thickness of 0.5 mm (trade name "Clarex" manufactured by Nitto Jushi Kogyo) was placed,on the transparent sheet 1. Then, a golf ball 7 (42.7 mm in diameter, 45.8 g in mass) was subjected to free-fall drops onto the transparent sheet 1 from a predetermined height and collision. Thereafter, it was confirmed by visual observation if the base layer 2 was cracked or broken. Then, the height in which the base layer 2 was damaged was obtained as a falling ball height (cm) and impact resistance was evaluated.

### [2] Viscoelasticity

Tanδ and G' (dyn/cm²) for each of the transparent flexible compositions Nos.1 to 8 mentioned above were measured with dynamic viscoelastic measurement apparatus ("MR-500" manufactured by Rheology, measurement conditions: applied frequency of 1 Hz, strain of 0.1, temperature of 30°C, a cone-and-plate having a cone diameter of 40 mm and a cone angle of 5 degrees).

### [3] Total transmittance (%)

A sample for measurement was prepared in such a manner that each of the transparent sheets Nos.1 to 8 mentioned above had a thickness of 0.5 mm. Total transmittance (%) for each of the transparent sheets Nos.1 to 8 at 25°C were measured using the sample for measurement, with "model (haze-gard plus)" manufactured by BYK-Gardner Gmbh.

### (4) Effect of Examples

According to Table 1, it is found that the transparent sheet No.8 in which a butyl rubber layer and a polycarbonate layer out of the present invention were used, is excellent in transparency and viscoelasticity, on the other hand, the falling ball height is significantly low, therefore it is inferior in impact resistance. On the contrary, it is found that as for the transparent sheets Nos.1 to 7 having the transparent flexible composition layers in which the thermoplastic elastomer component (A) mentioned above and the liquid material (B) mentioned above of the present invention are used in combination, all have the total transmittance of more than 90%, and have excellent transparency as well as excellent viscoelasticity, and moreover, the falling ball height are 45 cm or higher, therefore they are excellent in impact resistance.

In the comparison between the transparent sheets Nos.1 to 4 having the transparent flexible composition layers, in which a hydrogenated block polymer corresponding to an elastomer (A-1) and a butyl rubber corresponding to other elastomer (A-2) are used in combination as the thermoplastic elastomer component (A) mentioned above, and the transparent sheets Nos.5 to 7 having the transparent flexible composition layers, in which a butyl rubber was not used, it is found that the transparent sheets Nos.1 to 4 maintain a similar degree of transparency to that of the transparent sheets Nos.5 to 7, and at the same time, have tanδ of not lower than 0.15 and G' of not higher than 55,000 dyn/cm², and therefore, they show viscoelastiticy superior to that of the transparent sheets Nos.5 to 7, and moreover, the falling ball height is 55 cm or higher, therefore, they have impact resistance superior to that of the transparent sheets Nos.5 to 7. From these results, it is found that, in the present invention, combining an elastomer (A-1) and other elastomer (A-2) as the thermoplastic elastomer component (A) mentioned above makes impact resistance and viscoelasticity to be more improved, while excellent transparency is maintained.

Further, in the comparison between the transparent sheet No.1, in which hydrogenated block polymer 1 whose vinyl bond content of block (II), which is an amorphous part, is more than 50%, was used as a hydrogenated block polymer corresponding to an elastomer (A-1), and the transparent sheet No.2, in which hydrogenated block polymer 2 whose vinyl bond content of block (II) is less than 50%, was used, it is found that the transparent sheet No.1 maintains a similar degree of transparency to that of the transparent sheet No.2, and at the same time, it shows viscoelasticity and impact resistance superior to those of the transparent sheet No.2 according to the results that G' is smaller and the falling ball height is higher. From these results, it is found that, using a hydrogenated block polymer whose vinyl bond content of an amorphous part is 50% or higher makes impact resistance and viscoelasticity to be more improved, while excellent transparency is maintained.

Incidentally, the present invention is not limited to the ones described in the specific Examples mentioned above, but can be modified in various manners according to the purpose and application. For example, a particle whose diameter is 100 nm or less can be dispersed in the transparent resin layer mentioned above. As this particle, colloidal silica and the like may be used. In the case the particle mentioned above is comprised, plural particles accept a power onto the transparent resin layer and stress can be distributed. In addition, the transparent sheet of the present invention can further comprise an arbitrary layer such as polarized plate layer.

### [Industrial Applicability]

The transparent sheet of the present invention can be preferably used in a display panel for a cellular telephone, a personal digital assistant, a display for a desktop-type computer, a note-type computer, an in-vehicle computer, a touchscreen, a TV, a clock and the like.

## Claims

1. A transparent sheet, **characterized in that** it consists of a transparent flexible composition layer which comprises 500 to 5,000 parts by mass of a liquid material (B) based on 100 parts by mass of a thermoplastic elastomer component (A), and has a total transmittance of 90% or higher at 25°C and at a thickness of 0.5 mm.

2. The transparent sheet according to Claim 1, comprising a transparent resin layer on at least one surface of said transparent flexible composition layer.

3. The transparent sheet according to Claim 1, comprising a removable protective film layer on at least one surface of a surface-exposed face among said transparent flexible composition layer and said transparent resin layer.

4. The transparent sheet according to Claim 1, wherein thickness of said transparent flexible composition layer is 2.0 mm or less, and total thickness is 10 mm or less.

5. The transparent sheet according to Claim 1, wherein said thermoplastic elastomer component (A) comprises at least one type of elastomer (A-1) selected from the group consisting of a hydrogenated block polymer of a conjugated diene, a hydrogenated block copolymer of an aromatic vinyl compound and a conjugated diene, and an ethylene·**α-**olefin-based rubber.

6. The transparent sheet according to Claim 5, wherein said hydrogenated block polymer of a conjugated diene is a hydrogenated block polymer by hydrogenating a block polymer having, in its molecule, at least one butadiene polymer block (I) having a vinyl bond content of 5 to 25% in the block and at least one polymer block (II) having a mass ratio of a conjugated diene to other monomer of (100 to 50)/(0 to 50) and having a vinyl bond content of 25 to 95% by mass.

7. The transparent sheet according to Claim 5, wherein said thermoplastic elastomer component (A) further comprises other elastomer (A-2).

8. The transparent sheet according to Claim 1, wherein said liquid material (B) is a liquid material having a kinematic viscosity of not higher than 500 mm²/s at 40°C and being nonvolatile at a temperature between -100 and 50°C.

9. A method for producing a transparent sheet, **characterized by** forming a transparent flexible composition layer by molding a transparent flexible composition which comprises 500 to 5,000 parts by mass of a liquid material (B) based on 100 parts by mass of a thermoplastic elastomer component (A), and has a total transmittance of 90% or higher at 25°C and at a thickness of 0.5 mm by an extrusion method, a coating method, a casting method, a press method, an injection molding method or an inflation method.

10. The method for producing a transparent sheet according to Claim 9, wherein a removable protective film layer is provided by laminating a protective film on at least one surface of said transparent flexible composition layer and said transparent resin layer.

11. A method for producing a transparent sheet, **characterized by** laminating a transparent resin layer on at least one surface of a transparent flexible composition layer which comprises 500 to 5,000 parts by mass of a liquid material (B) based on 100 parts by mass of a thermoplastic elastomer component (A), and has a total transmittance of 90% or higher at 25°C and at a thickness of 0.5 mm.

12. The method for producing a transparent sheet according to Claim 11, wherein a releasable protective film layer is provided by laminating a protective film on at least one surface of said transparent flexible composition layer and said transparent resin layer.
